(19) Europäisches Patentamt
European Patent Office
Office européen des brevets

(11) **EP 2 532 528 B1**

(12) **EUROPEAN PATENT SPECIFICATION**

(45) Date of publication and mention
of the grant of the patent:
**21.10.2015 Bulletin 2015/43**

(51) Int Cl.:
***B42D 5/00*** *(2006.01)*    *G09F 3/10* *(2006.01)*

(21) Application number: **12170767.3**

(22) Date of filing: **05.06.2012**

(54) **Sticky note pad**

Haftnotizblock

Bloc-notes collant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2011 TW 100120376**

(43) Date of publication of application:
**12.12.2012 Bulletin 2012/50**

(73) Proprietor: **Taiwan Hopax Chemicals Mfg. Co., Ltd.
Kaohsiung City 831 (TW)**

(72) Inventors:
• **Kuo, Tsung-Tien
833 Kaohsiung (TW)**
• **Liu, Jen-Rong
830 Kaohsiung City (TW)**
• **Hsu, Tsun-Rung
814 Kaohsiung City (TW)**
• **Li, Ming-Yang
542 Nantou County (TW)**
• **Hsu, Chih-Wei
807 Kaohsiung City (TW)**

(74) Representative: **Gille Hrabal
Brucknerstrasse 20
40593 Düsseldorf (DE)**

(56) References cited:
EP-A1- 1 547 804          DE-A1- 19 513 211
DE-A1-102007 000 877   DE-U1- 9 409 930
US-A- 5 782 494           US-A1- 2007 172 621
US-B1- 6 187 432

EP 2 532 528 B1

## Description

This invention relates to a sticky note pad that is re-attachable, more particularly to a sticky note pad having a stack of note sheets each of which is unlikely to warp and deform when the note sheet is torn off.

Document US-A-5, 782, 494 discloses a sticky note pad in accordance with the prior art, as shown in figs. 1, 2, 23(a) & 13(b).

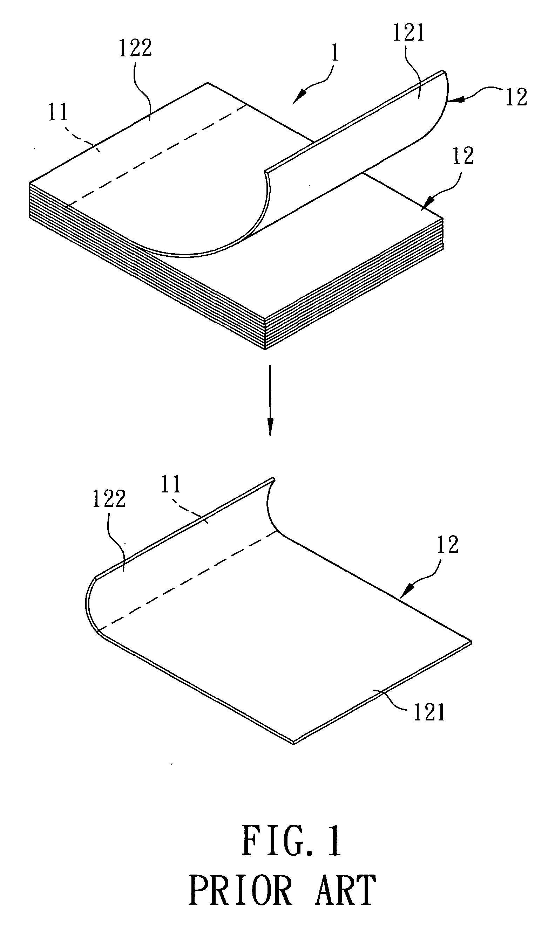

Referring to Fig. 1, a conventional sticky note pad 1 includes a stack of note sheets 12, each of which has a back face coated with an adhesive layer 11 at a first end 122 of the back face. When tearing the note sheet 12 from the stack, the tearing direction is from a second end 121 of the note sheet 12 that is distal from the adhesive layer 11 toward the first end 122 that is coated with the adhesive layer 11. During the tearing operation, the stress applied to the note sheet 12 accumulates at the first end 122 so that the note sheet 12 becomes warped before the note sheet 12 is separated from the stack. After the note sheet 12 is completely torn off, recovery of the note sheet 12 from warp is unlikely. Hence, after the note sheet 12 is stuck to an article, the second end 121 of the note sheet 12 tends to warp upwardly and may be folded when an external force is applied to the note sheet 12.

Furthermore, the warped note sheet 12 stuck to a page of a document is likely to fall off when an additional article, e.g., paper, is inserted into the same page of the document. The warped note sheet 12 is also likely to be attached to the inserted article.

Besides, the adhesive layer 11 is strip-shaped, and the area covered by the adhesive layer 11 is about 20% based on a surface area of the note sheet 12. It is well known that when the area of the adhesive layer 11 is increased, the adhesion of the note sheet 12 to an article can be improved. However, the amount of the adhesive for forming the adhesive layer 11 will be increased accordingly.

Therefore, in order to overcome the warp problem and to reduce the amount of the adhesive without adversely affecting the adhesion ability of the note sheet 12, the conventional note pad 1 needs further improvement.

Therefore, an object of the present invention is to provide a sticky note pad that can overcome the aforesaid drawbacks associated with the prior art.

Accordingly, a sticky note pad as defined in claim 1 is provided.

Other features and advantages of the present invention will become apparent in the following detailed description of the preferred embodiments of the invention, with reference to the accompanying drawings, in which:

Fig. 1 is a schematic view illustrating a note sheet being torn off from remaining note sheets of a conventional sticky note pad;

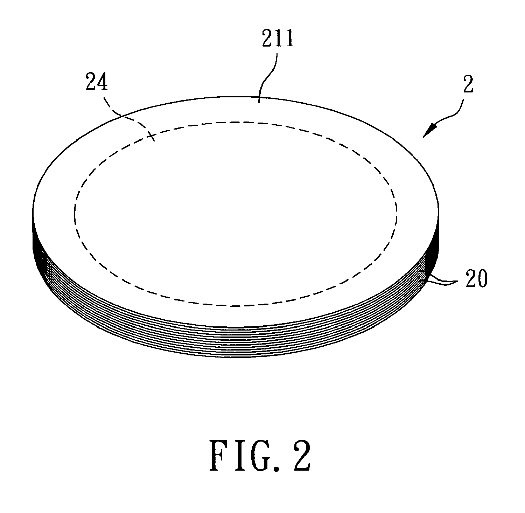

Fig. 2 is a perspective view of another sticky note pad according to the prior art;

Fig. 3 is a bottom view of a note sheet of the sticky note pad shown in Fig. 2A also according to the first embodiment of a sticky note pad according to the current invention;

Fig. 4 is an enlarged view of colloid particles included in an adhesive layer of the note sheet in a modified first embodiment according to this invention;

Fig. 5 is a picture illustrating the colloid particles of Fig. 4;

Fig. 6 is a bottom view of the second preferred embodiment of a note sheet of a sticky note pad according to this invention;

Fig. 7 is a bottom view of the third preferred embodiment of a note sheet of a sticky note pad according to this invention;

Fig. 8 is a bottom view of the fourth preferred embodiment of a note sheet of a sticky note pad according to this invention;

Fig. 9 is a bottom view illustrating the fifth preferred embodiment of a note sheet of a sticky note pad according to this invention;

Fig. 10 is a bottom view of the sixth preferred embodiment of a note sheet of a sticky note pad according to this invention;

Fig. 11 is a bottom view of the seventh preferred embodiment of a note sheet of a sticky note pad according to this invention;

Fig. 12 is a bottom view of the eighth preferred embodiment of a note sheet of a sticky note pad according to this invention;

Fig. 13(a) is a bottom view illustrating a conventional sticky note sheet that is used as a first comparative group in an adhesion test, in which an adhesive layer is formed along an edge of a substrate;

Fig. 13(b) is a bottom view illustrating a sticky note sheet that is used as a second comparative group in an adhesion test, in which an adhesive layer is formed in a central portion that is spaced apart from a periphery of a substrate;

Fig. 13(c) is a bottom view illustrating a sticky note sheet of this invention that is used as an experimental group in an adhesion test, in which an adhesive layer is formed in a central portion that is spaced apart from a periphery of a substrate and includes two spaced apart adhesive material units, one of the adhesive material units surrounding the other of the adhesive material units; and

Fig. 14 is a schematic view illustrating the deformation of the note sheet and the parameters (H, L₁, and L₂) used to determine a deformation percentage of the note sheet.

Before the present invention is described in greater detail with reference to the accompanying preferred embodiments, it should be noted herein that like elements are denoted by the same reference numerals throughout the disclosure.

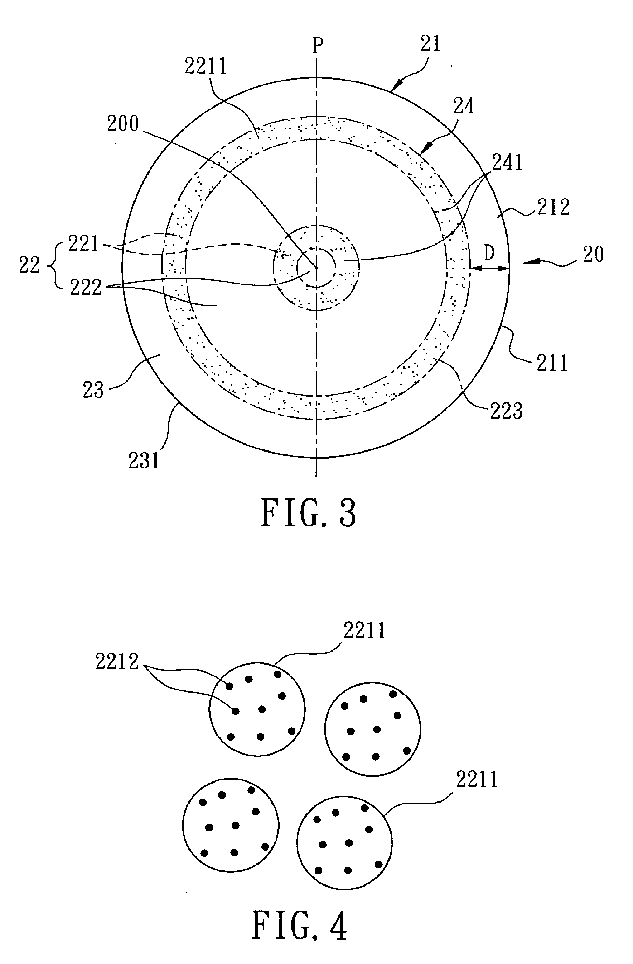

Referring to Fig. 3, the first preferred embodiment of a sticky note pad 2 according to this invention comprises a stack of note sheets 20 each of which includes a circular substrate 21 and an adhesive layer 24.

Referring to Fig. 3, the substrate 21 of each note sheet 20 has a writing face 211 and a back face 212 opposite to the writing face 211. The back face 212 has a central portion 22 and a peripheral portion 23 surrounding the central portion 22. The central portion 22 includes a looped boundary 223, two first regions 221 that are spaced apart in a radial direction, and two second regions 222 that are spaced apart in a radial direction and are disposed alternately with the two first regions 221 in the radial direction. An outermost one of the first regions 221 extends to surrounding the remainder of the first regions 221 and is disposed along the looped boundary 223. In each note sheet 20, the adhesive layer 24 is positioned on the central portion 22 of the back face 212, and includes two adhesive material units 241 respectively disposed on the first regions 221 and separated from each other by the outermost second region 222.

In this embodiment, each of the first regions 221 extends to surround a center 200 of the back face 212, and has a circular ring shape. The innermost first region 221 surrounds the innermost second region 222. Each of the adhesive material units 241 covers an entire area of a corresponding one of the first regions 221. It should be noted that although the substrate 21 and the adhesive layer 24 are circular in this embodiment, they may be formed into other shapes based on actual requirements.

The peripheral portion 23 has an outer periphery 231. The outer periphery 231 is also a periphery of the back face 212. The looped boundary 223 of the central portion 22 is a demarcation line between the peripheral portion 23 and the central portion 22. The back face 212 has a shortest line (P) passing through the center 200 of the back face 212 (see Fig. 3). When a length of the shortest line (P) from one point to an opposite point of the outer periphery 231 of the peripheral portion 23 is greater than 20 mm, a shortest distance (D) between the outer periphery 231 of the peripheral portion 23 and the looped boundary 223 of the central portion 22 is greater than 5 mm. In addition, the percentage of an area of the central portion 22 ranges from 20% to 99% based on an area of the back face 212. The area of the back face 212 includes the area of the central portion 22 and an area of the peripheral portion 23.

In each note sheet 20, the adhesive layer 24 includes apluralityofcolloidparticles2211 (i.e., an adhesive material for forming the adhesive layer 24 is a microsphere adhesive), and the colloid particles 2211 have an average particle size ranging from 10 to 120 microns, preferably from 30 to 120 microns. Alternatively, the adhesive layer 24 may be formed using a non-particle adhesive gel. The adhesive layer 24 is madefromapressure-sensitiveadhesive. Accordingly, the note sheet 20 is re-attachable.

By forming the adhesive layer 24 in the central portion 22 that is spaced apart from the outer periphery 231 of the peripheral portion 23, stress will not accumulate at an edge of the substrate 21. Thus, warp of the note sheet 20 can be alleviated.

In a modified first preferred embodiment, the adhesive layer 24 further includes a plurality of pigment particles 2212 (see Fig. 4). The pigment particles 2212 may be made of water-soluble dye including natural dye and synthetic dyes, or water-insoluble pigment including organic pigment and inorganic pigment. Thus, the position of the adhesive layer 24 can be clearly observed from the back face 212 of the note sheet 20, thereby making it possible to avoid touching the adhesive layer 24 which may reduce the adhesion ability of the adhesive layer 24. Besides, by virtue of the pigment particles 2212, the note sheet 20 can be exactly stuck to an obj ect without malposition. Of course, different colors of the pigment particles 2212 can be used to exhibit a colorful image on the substrate 21.

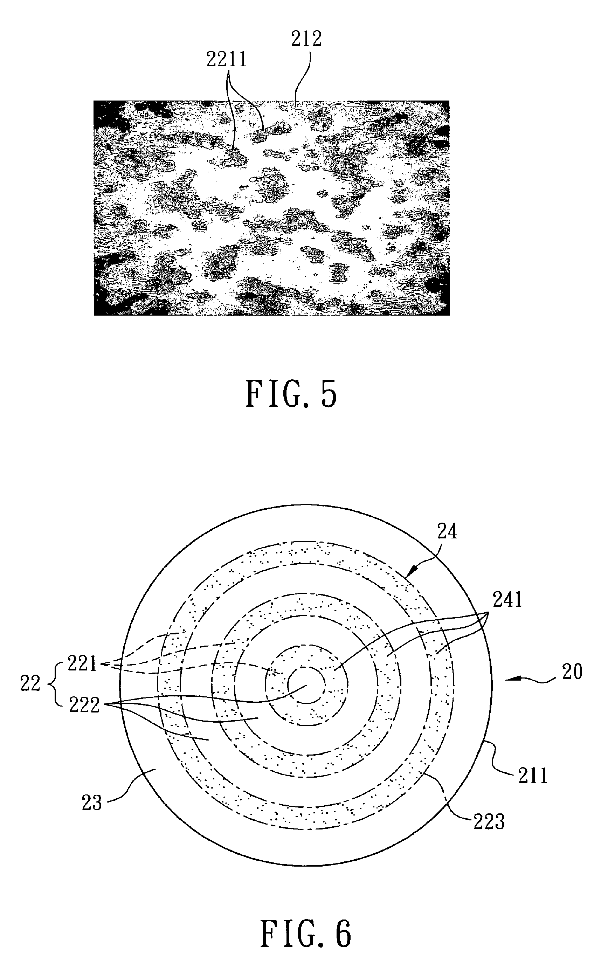

As shown in Fig. 4, each of the colloid particles 2211 is encapsulated with some of the pigment particles 2212. Fig. 5 shows that the colloid particles 2211 encapsulated with the pigment particles (not shown) can exhibit a color different from that of the back face 212. On the other hand, the pigment particles 2212 may be also dispersed on outer surfaces of the colloid particles 2211. When the adhesive layer 24 is formed using the non-particle adhesive gel, the pigment particles may be blended with the non-particle adhesive gel such that the adhesive layer 24 can exhibit a desired color.

Fig. 6 illustrates the second preferred embodiment of a note sheet 20 of a note pad (not shown) according to this invention. The second preferred embodiment differs from the first preferred embodiment in that the central portion 22 has three of the first regions 221 and three of the second regions 222. The adhesive layer 24 includes three adhesive material units 241 each of which covers an entire area of a corresponding one of the first regions 221.

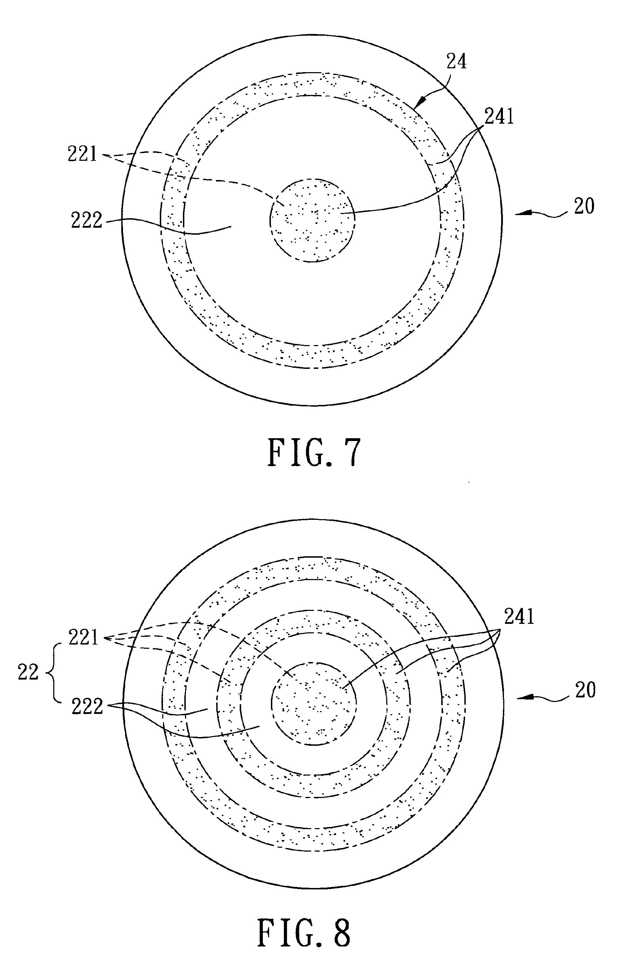

Fig. 7 illustrates the third preferred embodiment of a note sheet 20 of a note pad (not shown) according to this invention. The third preferred embodiment differs from the first preferred embodiment in that the central portion 22 has one second region 222 disposed between the two first regions 221. Thus, the innermost one of the first regions 221 has a round shape.

Fig. 8 illustrates the fourth preferred embodiment of a note sheet 20 of a note pad (not shown) according to this invention. The fourth preferred embodiment differs from the second preferred embodiment in that the central portion 22 has two second regions 222 each of which is disposed between the respective two of the first regions 221. Thus, the innermost one of the first regions 221 has a round shape.

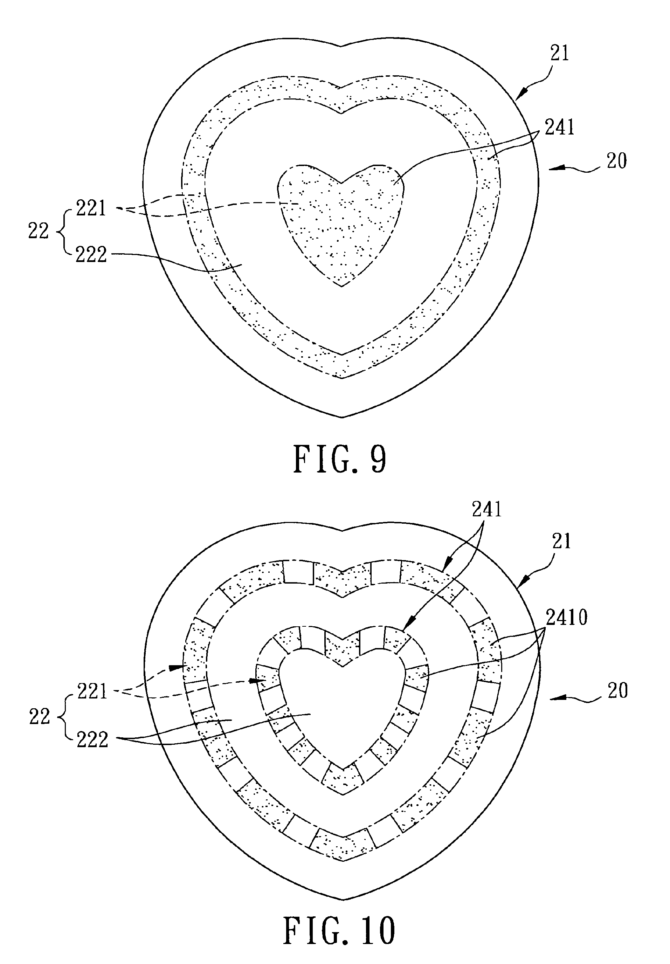

Fig. 9 illustrates the fifth preferred embodiment of a note sheet 20 of a note pad (not shown) according to this invention. The fifth preferred embodiment differs from the third preferred embodiment in that the substrate 21 is heart-shaped. The inner one of the first regions 221 is heart-shaped, and the outer one of the first regions 221 is annular heart-shaped.

Fig. 10 illustrates the sixth preferred embodiment of a note sheet 20 of a note pad (not shown) according to this invention. The sixth preferred embodiment differs from the first preferred embodiment in that the substrate 21 is heart-shaped. Each of the first regions 221 is annular heart-shaped. The adhesive material unit 241 on each of said first regions 221 includes a plurality of spaced-apart adhesive material members 2410.

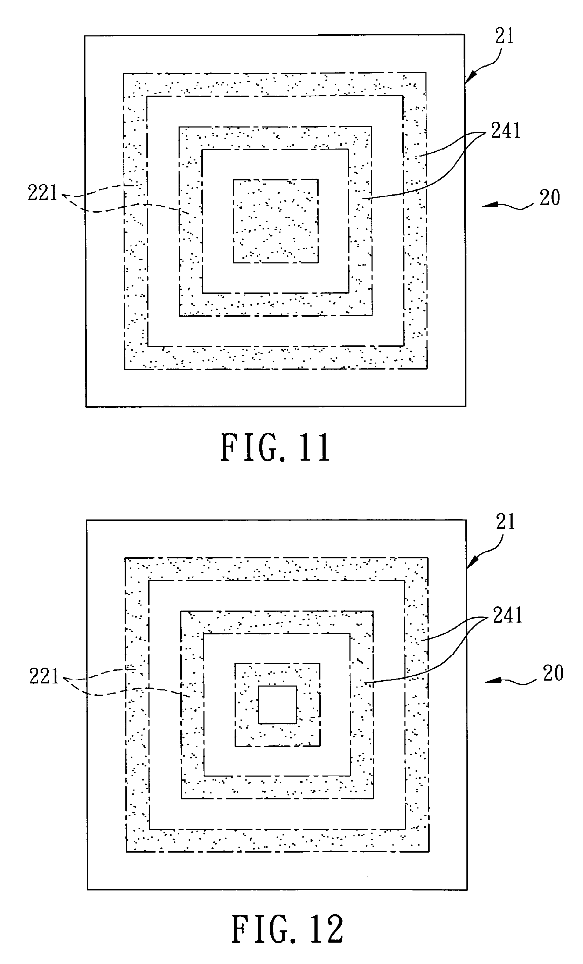

Fig. 11 illustrates the seventh preferred embodiment of a note sheet 20 of a note pad (not shown) according to this invention. The seventh preferred embodiment differs from the fourth preferred embodiment in that, in this embodiment, the substrate 21 has a rectangle shape, the innermost one of the first regions 221 also has a rectangle shape, and each of the remainder of the first regions 221 has a rectangular ring shape.

Fig. 12 illustrates the eighth preferred embodiment of a note sheet 20 of a note pad (not shown) according to this invention. The eighth preferred embodiment differs from the seventh preferred embodiment in that all of the first regions 221 have a rectangular ring shape.

Experiment

Adhesive tests were conducted to determine the influence of the position of the adhesive layer 24 on the back face 212 of the substrate 21 and the particle size of the colloid particles 2211 on the adhesion property of the note sheet 20.

Formation of the adhesive layer 24 is briefly described below. In a four-port reactor (5-liter) that was provided with a stirrer, a condenser and a thermometer, 80 grams of polyacrylic acid as a dispersing agent, 30 grams of sodium dodecyl sulfate (SDS), and 2500 grams of deionized water were added. In another container (e.g., a flask), 5 grams of benzoyl peroxide (BPO) was evenly dissolved in 1200 grams of 2-ethylhexyl acrylate (2-EHA) and 40 grams of acrylic acid (AA) so as to obtain a mixture. Thereafter, the mixture was poured into the reactor with stirring, and was mixed with the components in the reactor at a stirring rate of 5000 rpm for 15 minutes.

Next, the temperature in the reactor was raised to and kept at 70°C for 2 hours. Then, the temperature naturally rose to 95°C attributed to an exothermic reaction. After the temperature dropped to 70°C, the reactor was maintained at 70 °C for 8 hours. After the reaction was complete, the reactor was allowed to cool to room temperature, followed by filtering so as to obtain an adhesive material. The adhesive material includes a plurality of the colloid particles 2211 having an average particle size of about 45 microns. Since the structures of the reactor, the stirrer, the condenser and the thermometer are well-known in the art, the same are not describedherein for the sake of brevity.

In the first comparative group, the substrate 21' had a size of 30 mm $\times$ 30mm, and the adhesive material was coated along an edge of the back face 212' of the substrate 21' , followed by drying at 100°C so as to form the adhesive layer 24' , thereby obtaining the note sheet 20'. In the first comparative group, the adhesive layer 24' was not spaced apart from a periphery of the back face 212' of the substrate 21' and had a width of 11.88 mm and a length of 30 mm.

$$\text{The area of the back face} = 30 \text{ mm} \times 30 \text{ mm} = 900 \text{ mm}^2$$

$$\text{The coating area of the adhesive layer} = 11.88\text{mm} \times 30\text{mm} = 356.4 \text{ mm}^2$$

$$\text{The percentage of the area of the adhesive layer} = \text{(the area of the adhesive layer/ the area of the back face)} \times 100\% = (356.4 \text{ mm}^2 / 900 \text{ mm}^2) \times 100\% = 39.6\%$$

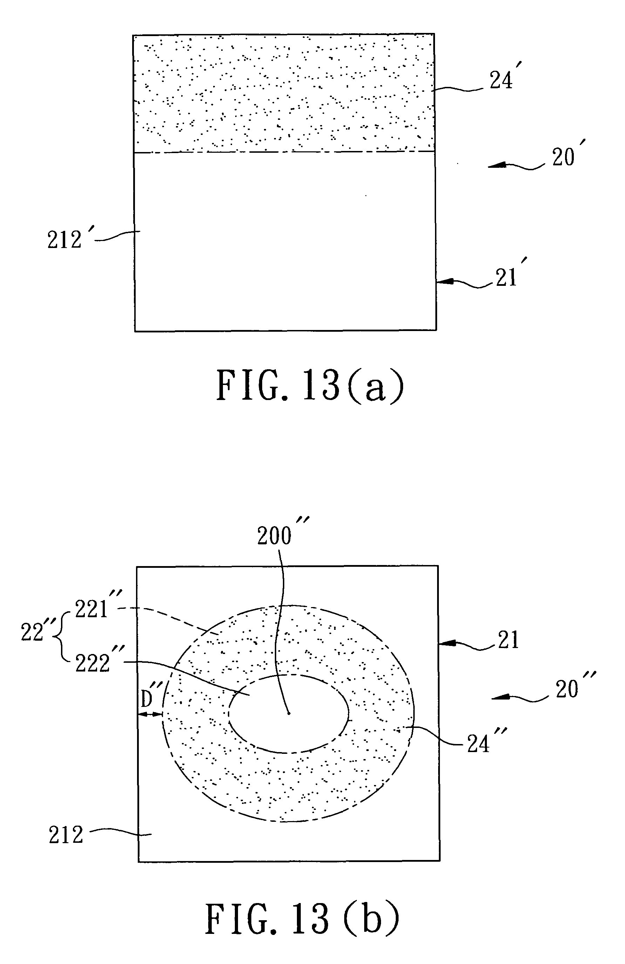

In the second comparative group (see Fig. 13(b)), the note sheet 20" was in the form of a square, and the substrate 21" had a size of 30 mm $\times$ 30mm and includes an oval-shaped central portion 22". The central portion 22" only had a first region 221" and a second region 222". A maximum diameter of the first region 221" from a center 200" of the back face 212" was 25 mm and a minimum diameter of the first region 221" from the center 200" of the back face 212" was 22 mm. A maximum diameter of the second region 222" from the center 200" of the back face 212" was 12 mm and a minimum diameter of the second region 222" from the center 200" of the back face 212" was 8 mm. The adhesive material was formed on an entire area of the first region 221" of the central portion 22", followed by drying at 100°C to form the adhesive layer 24", thereby obtaining the note sheet 20". In the second comparative group, the adhesive layer 24 was spaced apart from the periphery 231 of the substrate 21. The area of the adhesive layer 24 was equal to the area of the first region 221". The area covered and surrounded by the adhesive layer 24" was equal to the area of the central portion 22". The percentage of the area covered and surrounded by the adhesive layer 24", i.e., the area of the central portion 22", based on the area of the back face 212" is referred to as an enclosing percentage of the adhesive layer 24".

$$\text{The area of the back face} = 30 \text{ mm} \times 30 \text{ mm} = 900 \text{ mm}^2$$

$$\text{The coating area of the adhesive layer} = (22 \text{ mm} \times 25 \text{ mm} \div 4 \times \pi) - (8 \text{ mm} \times 12 \text{ mm} \div 4 \times \pi) = 431.8 \text{ mm}^2 - 75.4 \text{ mm}^2 = 356.4 \text{ mm}^2$$

$$\text{The area covered and surrounded by the adhesive layer} = \text{the area of the central portion} = 22 \text{ mm} \times 25 \text{ mm} \div 4 \times \pi = 431.8 \text{ mm}^2$$

$$\text{The enclosing percentage of the adhesive layer} = (\text{the area of the central portion}/ \text{ the area of the back face}) \times 100\% = (431.8 \text{ mm}^2 / 900 \text{ mm}^2) \times 100\% = 47.9\%$$

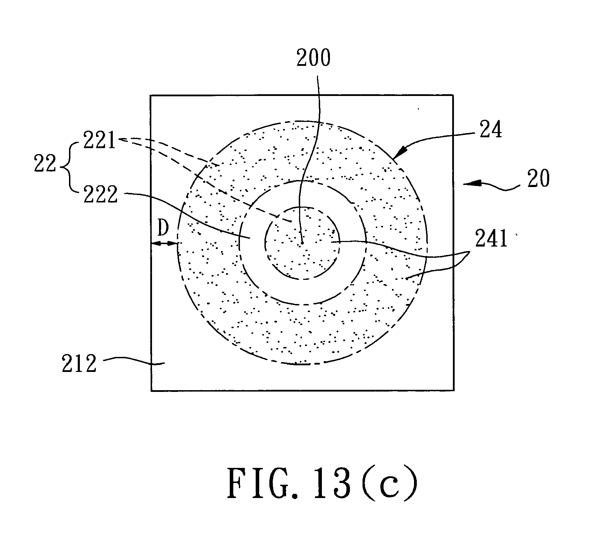

In the experimental group (see Fig. 13 (c)), the note sheet 20 had a structure similar to that of the third preferred embodiment except that the note sheet 20 was in the form of a square. The substrate 21 had a size of 30 mm $\times$ 30mm. The central portion 22 had two first regions 221 and a second region 222. The outer first region 221 had a circular annular shape, and had an outer diameter of 23.5 mm from a center 200 of the back face 212 and an inner diameter of 12 mm from a center 200 of the back face 212. The inner first region 221 had a circular shape, and a diameter of 7 mm. The adhesive material was formed on an entire area of each first region 221 in the central portion 22, followed by drying at 100°C to form the adhesive layer 24, thereby obtaining the note sheet 20. In the experimental group, the adhesive layer 24 has two adhesive material units 241 respectively formed on the two first regions 221. The area of the adhesive layer 24 was equal to the total area of the first regions 221. The area covered and surrounded by the adhesive layer 24 was equal to the area of the central portion 22. The percentage of the area covered and surrounded by the adhesive layer 24, i.e., the area of the central portion 22, based on the area of the back face 212 is referred to as an enclosing percentage of the adhesive layer 24.

$$\text{The area of the back face} = 30 \text{ mm} \times 30 \text{ mm} = 900 \text{ mm}^2$$

$$\text{The coating area of the adhesive layer} = (23.5 \text{ mm} \times 23.5 \text{ mm} \div 4 \times \pi) - (12 \text{ mm} \times 12 \text{ mm} \div 4 \times \pi) + (7 \text{ mm} \times 7 \text{ mm} \div 4 \times \pi) = 433.7 \text{ mm}^2 - 113.1 \text{ mm}^2 + 38.5 \text{ mm}^2 = 359.1 \text{ mm}^2$$

$$\text{The area covered and surrounded by the adhesive layer} = \text{the area of the central portion} = 23.5 \text{ mm} \times 23.5 \text{ mm} \div 4 \times \pi = 433.7 \text{ mm}^2$$

$$\text{The enclosing percentage of the adhesive layer} = (\text{the area of the central portion}/ \text{ the area of the back face}) \times 100\% = (433.7 \text{ mm}^2 / 900 \text{ mm}^2) \times 100\% = 48.2\%$$

It should be noted that although the coating areas of the adhesive layers 24', 24", 24 in the comparative and experimental groups are substantially the same (356.4 mm$^2$ ~ 359.1 mm$^2$), the enclosing percentage (48.2%) of the adhesive layer 24 in the experimental group is much greater than that of the first comparative group (39.6%).

The adhesion test was evaluated by deformation percentage of the note sheets 20', 20" and 20 after the note sheets 20', 20" and 20 were stuck to an object for 16 hours. Six different objects were used for the adhesion test, i.e., a storage box made of low density polyethylene (LDPE), a storage box made of high density polyethylene (HDPE), a beverage cup made of polypropylene (PP), a wood board, a transparent folder made of PP, and a flannel screen.

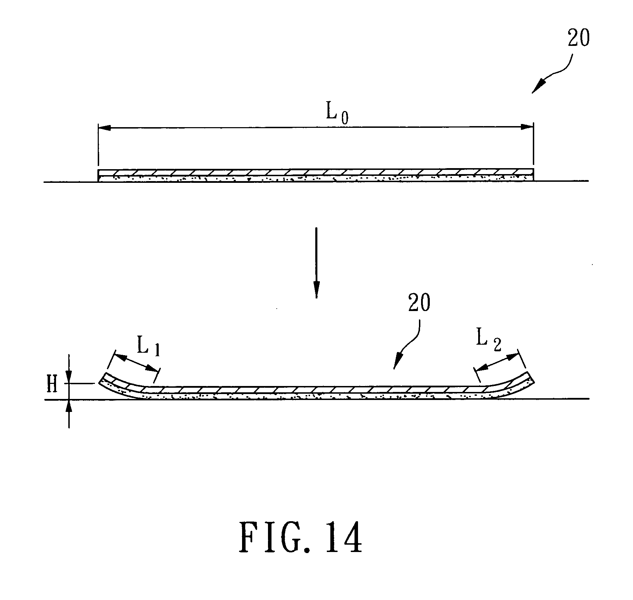

Referring to Fig. 14, after the note sheet 20 was stuck to one of the aforesaid objects for 16 hours, it was observed whether or not two opposite edges in a longitudinal direction, i.e., the length direction, of the note sheet 20 were warped. When a warp height (H) of an edge of the note sheet 20 from a surface of the object is greater than 2 mm, it is regarded as deformation. The warp length ($L_1$, $L_2$) of the note sheet 20 at each of the opposite edges thereof in the length direction is the length of a portion of the note sheet 20 that is detached from the object at each of the opposite edges. The note sheet 20 in the length direction has a length ($L_0$). The deformation percentage is defined as follows:

$$\text{The deformation percentage} = (L_1 + L_2)/L_0 \times 100\%$$

The higher the deformation percentage of the note sheet 20, the lower is the adhesion ability thereof. When the deformation percentage is 100%, it means that the note sheet 20 has completely fallen off.

From the results shown in Table 1, it can be known that, by spacing apart the adhesive layer 24 from the outer periphery 231 of the back face 212, the deformation percentage of the note sheet 20 can be effectively reduced (see the comparative group 1 and the experimental group). Besides, each of the coating area and the enclosing percentage in the second comparative group and the experimental group is relatively close. However, since, in the experimental group, two adhesive material units 241 are formed on two spaced apart first regions 221 and the adhesive material formed on the inner first regions 221 is in a round shape, the note sheet 20 has better adhesive ability compared to the note sheet 20" of the second comparative group.

Table 1

| Adhesion ability of the adhesive layer with respect to the formed position on the note sheet | | | |
|---|---|---|---|
| | Comparative Group 1 | Comparative Group 2 | Experimental Group |
| Storage box (LDPE) | 15% | 0% | 0% |
| Storage box (HDPE) | 30% | 0% | 0% |

(continued)

| Adhesion ability of the adhesive layer with respect to the formed position on the note sheet | | | |
| --- | --- | --- | --- |
| | Comparative Group 1 | Comparative Group 2 | Experimental Group |
| Beverage cup (PP) | 87% | 55% | 46% |
| Wood board | 0% | 0% | 0% |
| Transparent folder (PP) | 0% | 0% | 0% |
| Flannel screen | 100% | 65% | 48% |

In summary, by forming the adhesive layer 24 in the central portion 22 to be spaced apart from the outer periphery 231 of the peripheral portion 23, stress will not accumulate at an edge of the substrate 21. Moreover, the adhesive layer 24 formed in the central portion 22 has a relatively large enclosing percentage as compared to the conventional note sheet 12 shown in Fig. 1. Thus, the warp problem of the note sheet 20 can be alleviated and the adhesion ability of the note sheet 20 can be improved. Besides, by forming the adhesive material units 241 spaced apart in a radial direction, the note sheet 20 has an improved adhesive property.

While the present invention has been described in connection with what are considered the most practical and preferred embodiments, it is understood that this invention is not limited to the disclosed embodiments but is intended to cover various arrangements included within the scope of the appended claims.

**Claims**

1.  A sticky note pad (2), comprising:

    a stack of note sheets (20) each of which includes:

       a substrate (21) having a writing face (211) and a back face (212) opposite to said writing face (211), said back face (212) having a central re-adherable portion(22) and a peripheral flippable portion (23) surrounding said central re-adherable portion (22) ; and
       an adhesive layer (24) having a predetermined surface area, and including a plurality of loop-shaped adhesive material segments (241) formed on said central re-adherable portion (22) to permit said substrate (21) together with said adhesive layer (24) to be releasably attached to said writing face (211) of a next one of said note sheets (20), said loop-shaped adhesive material segments (241) surrounding and being radially spaced apart from one another, wherein the surface area of said adhesive layer (24) remains constant independent of number of said looped-shaped adhesive material segments (241).

2.  The sticky note pad (2) of Claim 1, wherein an innermost one of said loop-shaped adhesive material segments (241) extends inwardly from its outer boundary to terminate at a center (200) of said back face (212).

3.  The sticky note pad (2) of Claim 1, wherein each of said loop-shaped adhesive material segments (241) of said adhesive layer (24) includes a plurality of colloid particles (2211) having an average particle size ranging from 30 to 120 microns.

4.  The sticky note pad (2) of Claim 1, wherein each of said loop-shaped adhesive material segments (241) of said adhesive layer (24) includesanon-particleadhesive gel.

5.  The sticky note pad (2) of Claim 1, wherein a percentage of an area of said central re-adherable portion (22) based on a total area of said back face (212) ranges from 20% to 99%.

6.  The sticky note pad (2) of Claim 1, wherein said peripheral flippable portion (23) has an outer periphery (231), a shortest distance between said outer periphery (231) and a center (200) of said back face (212) being greater than 10 mm, a shortest distance between said outer periphery (231) of said peripheral flippable portion (23) and said central re-adherable portion (22) being greater than 5mm.

7.  The sticky note pad (2) of Claim 3, wherein each of said loop-shaped adhesive material segments (241) of said adhesive layer (24) further includes a plurality of pigment particles (2212).

8. The sticky note pad (2) of Claim 7, wherein said pigment particles (2212) are encapsulated in said colloid particles (2211).

9. The sticky note pad (2) of Claim 7, wherein said pigment particles (2212) are dispersed on outer surfaces of said colloid particles (2211).

10. The sticky note pad (2) of Claim 1, wherein each of said loop-shaped adhesive material segments (241) of said adhesive layer (24) includes a non-particle adhesive gel, and a plurality of pigment particles blended with said non-particle adhesive gel.

11. The sticky note pad (2) of Claim 1, wherein each of said loop-shaped adhesive material segments (241) of said adhesive layer (24) includes a pressure-sensitive adhesive.

**Patentansprüche**

1. Haftnotizblock (2) umfassend:

   einen Stapel Notizblätter (20), die jeweils folgendes umfassen:

   ein Substrat (21) mit einer Schreibfläche (211) und einer Rückseite (212) gegenüber der Schreibfläche (211), wobei die Rückseite (212) einen wieder anheftbaren Mittelteil (22) und einen umkfappbaren umlaufenden Teil (23), der den wieder anheftbaren Mittelteil (22) aufweist; und
   eine Klebeschicht (24) mit einer vorbestimmten Oberfläche, und eine Vielzahl von schlingenförmigen Klebematerialsegmenten (241) umfassend, die auf dem wieder anheftbaren Mittelteil (22) ausgebildet sind, um zu ermöglichen, dass das Substrat (21) zusammen mit der Klebeschicht (24) wieder lösbar auf die Schreibfläche (211) eines nächsten der Notizblätter (20) aufgeklebt wird, wobei die schlingenförmigen Klebematerialsegmente (241) sich gegenseitig umgeben und voneinander beabstandet sind, wobei die Oberfläche der Klebeschicht (24) unabhängig von der Anzahl der schlingenförmigen Klebematerialsegmente (241) konstant bleibt.

2. Haftnotizblock (2) nach Anspruch 1, wobei sich eines der innersten Segments der schlingenförmigen Klebematerialsegmente (241) von seiner Außengrenze aus nach innen erstreckt, um in der Mitte (200) der Rückseite (212) zu enden.

3. Haftnotizblock (2) nach Anspruch 1, wobei jedes der schlingenförmigen Klebematerialsegments (241) der Klebeschicht (24) eine Vielzahl von Kolloidteilchen (2211) mit einer durchschnittlichen Teilchengröße im Bereich von 30 ä 120 Mikron umfasst.

4. Haftnotizblock (2) nach Anspruch 1, wobei jedes der schlingenförmigen Klebematerialsegmente (241) der Klebeschicht (24) ein nichtteilchenförmiges Klebegel umfasst.

5. Haftnotizblock (2) nach Anspruch 1, wobei ein Prozentsatz eines Bereichs des wieder anheftbaren Mittelteils (22) auf der Grundlage eines Gesamtbereichs der Rückseite (212) im Bereich von 20% bis 99% liegt.

6. Haftnotizblock (2) nach Anspruch 1, wobei der umklappbare umlaufende Teil (23) eine Außenumfang (231) aufweist, wobei ein kürzester Abstand zwischen dem Außenumfang (231) und der Mitte (200) der Rückseite (212) größer als 10 mm ist, ein kürzester Abstand zwischen dem Außenumfang (231) des umklappbaren umlaufenden Teils (23) und dem wieder anheftbaren Mittelteil (22) größer als 5 mm ist.

7. Haftnotizblock (2) nach Anspruch 3, wobei jedes der schlingenförmigen Klebematerialsegmente (241) der Klebeschicht(24) weiterhin eine Vielzahl von Pigmentteilchen (2212) umfasst.

8. Haftnotizblock (2) nach Anspruch 7, wobei die Pigmentteilchen (2212) auf den Außenflächen der Kolloidteilchen (2211) dispergiert sind.

**9.** Haftnotizblock (2) nach Anspruch 7, wobei die Pigmentteilchen (2212) in den Kolloidteilchen (2211) verkapselt sind.

**10.** Haftnotizblock (2) nach Anspruch 1, wobei jedes der schlingenförmigen Klebematerialsegmente (241) der Klebeschicht (24) ein nicht teilchenförmiges Klebegel und eine Vielzahl von mit dem nicht teilchenförmigen Klebegel vermischten Pigmentteilchen umfasst.

**11.** Haftnotizblock (2) nach Anspruch 1, wobei jedes der schlingenförmigen Klebematerialsegmente (241) der Klebeschicht (24) einen Haftklebstoff umfasst.

**Revendications**

**1.** Bloc-notes collant (2) comprenant :

une pile de feuille de notes (20), dont chacune comprend :

un substrat (21) ayant une face d'écriture (211) et une face arrière (212) opposée de la dite face d'écriture (211), ladite face arrière (212) ayant une portion re-adhérable centrale (22) et une portion retournable périphérique (23) entourant ladite portion re-adhérable centrale (22) ; et
une couche adhésive (24) ayant une superficie prédéterminée, et incluant une pluralité de segments de matériau adhésive en forme de boucle (241) formée sur ladite portion re-adhérable centrale (22) pour permettre audit substrat (21) ensemble avec ladite couche adhésive (24) d'être adhéré à ladite face d'écriture (211) d'une prochaine desdites feuille de notes (20), lesdites segments de matériau adhésive en forme de boucle (241) entourant et étant espacés d'un de l'autre, dans lequel la superficie de ladite couche adhésive (24) reste constante indépendamment du nombre dudit matériau adhésive en forme de boucle (241).

**2.** Bloc-notes collant (2) selon la revendication 1, dans lequel l'un des segments le plus intime de matériau adhésive en forme de boucle (241) s'étend vers intérieur à partir de sa limite extérieure pour terminer au centre (200) de ladite face arrière (212).

**3.** Bloc-notes collant (2) selon la revendication 1, dans lequel chacun desdits segments le plus intime de matériau adhésive en forme de boucle (241) de ladite couche adhésive (24) inclue une pluralité de particules colloïdes (2211) ayant une taille de particule moyenne dans la gamme de 30 à 120 microns.

**4.** Bloc-notes collant (2) selon la revendication 1, dans lequel chacun desdits segments le plus intime de matériau adhésive en forme de boucle (241) de ladite couche adhésive (24) inclue un gel adhésif non-particule.

**5.** Bloc-notes collant (2) selon la revendication 1, dans lequel un pourcentage d'une région de ladite portion re-adhérable centrale (22) basée sur une région totale de ladite face arrière (212) est dans la gamme de 20% à 99%.

**6.** Bloc-notes collant (2) selon la revendication 1, dans lequel ladite portion retournable périphérique (23) a une périphérie extérieure (231), une distance la plus courte entre ladite périphérie extérieure (231) et le centre (200) de ladite face arrière (212) étant supérieure à 10 mm, une distance la plus courte entre ladite périphérie extérieure (231) de ladite portion retournable périphérique (23) et ladite portion re-adhérable centrale (22) étant supérieure à 5 mm.

**7.** Bloc-notes collant (2) selon la revendication 3, dans lequel chacun desdits segments de matériau adhésive en forme de boucle (241) de ladite couche adhésive (24) inclue en outre une pluralité de particules de pigment (2212).

**8.** Bloc-notes collant (2) selon la revendication 7, dans lequel lesdites particules de pigment (2212) sont dispersées sur les surfaces extérieures desdites particules colloïdes (2211).

**9.** Bloc-notes collant (2) selon la revendication 7, dans lequel lesdites particules de pigment (2212) sont encapsulées dans lesdites particules colloïdes (2211).

**10.** Bloc-notes collant (2) selon la revendication 1, dans lequel chacun desdits segments de matériau adhésive en forme de boucle (241) de ladite couche adhésive (24) inclue un gel adhésif non-particule, et une pluralité de particules de pigmente mélangées avec ledit gel adhésif non-particule.

11. Bloc-notes collant (2) selon la revendication 1, dans lequel chacun desdits segments de matériau adhésive en forme de boucle (241) de ladite couche adhésive (24) inclue un adhésif sensitif à la pression.

FIG. 1
PRIOR ART

FIG. 2

FIG. 3

FIG. 4

FIG. 5

FIG. 6

**FIG. 7**

**FIG. 8**

FIG. 9

FIG. 10

**FIG. 11**

**FIG. 12**

FIG. 13(a)

FIG. 13 (b)

FIG. 13(c)

# FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5782494 A